Europäisches Patentamt

European Patent Office

Office européen des brevets

(11) Veröffentlichungsnummer: **0 369 181**
**A2**

(12) **EUROPÄISCHE PATENTANMELDUNG**

(21) Anmeldenummer: 89119400.3

(22) Anmeldetag: 19.10.89

(51) Int. Cl.⁵: **B05C 3/20**

(30) Priorität: 20.10.88 DE 3835727

(43) Veröffentlichungstag der Anmeldung:
23.05.90 Patentblatt 90/21

(84) Benannte Vertragsstaaten:
AT BE DE FR GB

(71) Anmelder: **Lenhardt Maschinenbau GmbH
Industriestrasse 2-4
D-7531 Neuhausen-Hamberg(DE)**

(74) Vertreter: **Twelmeier, Ulrich, Dipl.Phys. et al
Westliche Karl-Friedrich-Strasse 29-31
D-7530 Pforzheim(DE)**

(54) Verfahren und Düse zum Versiegeln der Kanten von dünnen Werkstücken.

(57) Kanten von dünnen, plattenförmigen oder tafelförmigen Werkstücken oder daraus hergestellten
Formteilen, insbesondere von Karosserieblechen,
werden versiegelt, indem eine zum Zeitpunkt der
Verarbeitung pumpbare und sich hernach allmählich
verfestigende Versiegelungsmasse in zäh-pastösem
Zustand in einem Arbeitsgang den Rand des Werkstückes U-förmig umgreifend auf das Werkstück aufgetragen wird. Zugleich wird eine dazu geeignete
Düse beschrieben.

$A - A$

Fig. 11

EP 0 369 181 A2

## Verfahren und Düse zum Versiegeln der Kanten von dünnen Werkstücken

Gegenstand der Erfindung ist ein Verfahren zum Versiegeln der Kanten von dünnen, plattenförmigen oder tafelförmigen Werkstücken oder daraus hergestellten Formteilen, insbesondere von Karosserieblechen, sowie eine Düse zum Durchführen dieses Verfahrens.

Im Automobilbau bestehen Karosserieteile häufig aus einem inneren Karosserieblech und aus einem äußeren Karosserieblech, welches etwas größer ist als das innere Karosserieblech und an seinem Rand umgebördelt ist, so dass es den Rand des inneren Karosserieblechs fest umgreift. Einen solchen Aufbau findet man z.B. bei der Motorhaube, bei der Kofferraumklappe und bei den Türen. Die Bördelfalze dieser Karosserieteile sind besonders korrosionsanfällig. Es ist bekannt, sie deshalb zu versiegeln, indem man vor dem Bördelvorgang auf die Innenseite des äußeren Karosserieblechs am Rand eine Versiegelungsmasse aufträgt, die nach dem Bördelvorgang den Rand des inneren Karosserieblechs beidseitig umschließt. Üblicherweise wird die Versiegelungsmasse auf das Karosserieblech aufgesprüht. Da sie jedoch von zäh-klebriger Beschaffenheit ist, kann sie nicht unmittelbar versprüht werden, sondern muss zunächst in einem Lösungsmittel aufgelöst werden, welches nach dem Aufsprühen der Lösung auf das Karosserieblech wieder verdampft. Das Arbeiten mit solchen Lösungsmitteln ist aufwendig und deshalb unerwünscht, denn es kann nur in besonderen Räumen durchgeführt werden, die mit Einrichtungen zum Absaugen und Zurückhalten der Lösungsmitteldämpfe ausgerüstet sind. Ausserdem erhält man nach dem bekannten Verfahren nur verhältnismässig dünne Schichten der Versiegelungsmasse auf dem Karosserieblech, wodurch die Gefahr besteht, dass sich nach dem Bördelvorgang im Bördelfalz noch Hohlräume befinden, die nicht durch Versiegelungsmasse ausgefüllt sind. In diesen Hohlräumen besteht eine besondere Korrosionsgefahr.

Aus der DE-B-28 04 383 ist es bekannt, den Rand eines Karosserieblechs in eine mit der pastösen Masse gefüllte Kammer einzutauchen, die zu diesem Zweck einseitig einen Schlitz hat, dessen Gestalt dem Verlauf des Randes des Karosserieblechs angepaßt ist. Anschließend wird das Blech quer zu seinem Rand aus der Kammer herausgezogen und dabei oder danach die pastöse Masse in der Kammer nachgefüllt. Diese Arbeitsweise hat verschiedene Nachteile. Erstens benötigt man für unterschiedlich geformte Randbereiche unterschiedliche Beschichtungskammern. Zweitens benötigt man zum Zentrieren des Blechrandes im Schlitz der Kammer über die Länge des Schlitzes verteilt eine Folge von Rippen oder Zähnen, an deren Stelle das Blech nicht beschichtet werden kann. Drittens erhält man parallel zum Rand des Blechs keinen gleichmässigen, glatten Abschluß der Beschichtung, weil der Schlitz an dieser Stelle offen ist und die pastöse Masse beim Einschieben des Blechs in die Kammer aus dem Schlitzbereich teilweise verdrängt wird. Ein Einspeisen der Masse unter Druck in die Kammer während des Beschichtens eines Blechrandes ist nach der Offenbarung in der DE-B-28 04 383 schwierig, da die pastöse Masse aus dem offenen Schlitz der Kammer unkontrolliert austreten kann. Viertens ist es schwierig, die Kammer auf voller Länge gleichmässig zu füllen, ohne dass die pastöse Masse aus dem Schlitz austritt. Fünftens reißt die pastöse Masse beim Herausziehen des Blechs an dessen Kante unkontrolliert ab, so dass ausgerechnet die besonders korrosionsgefährdete Kante unterschiedlich dick und lückenhaft beschichtet ist. Ausserdem können beim Abreißen der pastösen Masse unerwünschte Fäden gezogen werden. Sechstens kann eine Beschichtung des Blechs an mehreren oder allen Randabschnitten nur schrittweise unter Einsatz mehrerer Beschichtungskammern erfolgen, wobei ein dichter gegenseitiger Anschluß der in Schritten aufgetragenen Masse nicht gewährleistet ist. Siebtens eignet sich die in der DE-B-28 04 383 offenbarte Arbeitsweise nicht für das Versiegeln des Randes von Löchern in Blech.

Um eine Antenne an einer Automobilkarosserie zu befestigen, ist es bekannt, ein Loch in das Karosserieblech zu schneiden und das Schutzrohr der Antenne am Rand des Loches festzulegen. Die Stirnkante des Karosserieblechs ist in diesem Loch vor allem dann besonders korrosionsanfällig, wenn das Loch erst nach der üblichen Korrosionsschutzbehandlung des Karosserieblechs in das Karosserieblech eingeschnitten wird. Es ist üblich, das Antennenschutzrohr in dem Loch mittels eines aus Gummi oder aus einem Kunststoff bestehenden ringförmigen Montageteils zu halten, welches einerseits am Schutzrohr der Antenne festgelegt ist und andererseits eine schmale Ringnut hat, in welche der das Loch begrenzende Rand des Karosserieblechs eingeführt wird. Der Zutritt von Feuchtigkeit zur Stirnkante des Karosserieblechs ist dadurch aber nicht zuverlässig unterbunden, so dass das Karosserieblech an dieser Stelle früher oder später doch rostet.

Der Erfindung liegt die Aufgabe zugrunde, einen einfachen Weg aufzuzeigen, durch den sich die äußeren Kanten von Blechen, insbesondere von Karosserieblechen, ebenso wie die Kanten von Löchern in Blechen ohne Unterbrechung zuverlässig, dauerhaft und gleichmässig dick versiegeln lassen.

Diese Aufgabe wird gelöst durch ein Verfahren mit den im Anspruch 1 angegebenen Merkmalen sowie durch eine Düse mit den im Anspruch 5 angegebenen Merkmalen. Vorteilhafte Weiterbildungen der Erfindung sind Gegenstand der Unteransprüche.

Erfindungsgemäß wird vorgeschlagen, die Kanten von Karosserieblechen und ähnlich dünnen Werkstücken dadurch zu versiegeln, dass man die den Rand des Werkstückes U-förmig umgreifende Versiegelungsmasse längs des Randes fortschreitend auf den Rand des Werkstückes aufträgt. Das Auftragen erfolgt in einem Arbeitsgang so, dass die Dichtmasse zugleich auf die Oberseite, auf die Unterseite und auf die Stirnseite aufgetragen wird, so dass sich eine ununterbrochene U-förmige, gleichmässige Beschichtung ergibt. Dadurch, dass die Versiegelungsmasse längs des Randes fortschreitend aufgetragen wird, kann man leicht eine ununterbrochene Beschichtung erhalten, deren Dikke längs des Randes des Werkstückes gleich bleibt. Zugleich erhält man einen sauberen, glatten Abschluss der Versiegelungsmasse an den zur Werkstückkante parallelen Rändern der Beschichtung, weil diese nicht quer zur Werkstückkante durch einen Schlitz hindurchgezogen wird. Insbesondere ist es möglich, auf der Stirnseite des Werkstücks eine Beschichtung von vorgegebener, gleichbleibender Dicke zu erhalten. Das längs des Randes fortschreitende Auftragen der Versiegelungsmasse kann mit der im Anspruch 5 angegebenen schmalen Düse erfolgen, mit welcher man sowohl den äußeren Rand eines dünnen Werkstükkes als auch den Rand eines Loches darin abfahren kann, letzteres lediglich mit der Einschränkung, dass die Düse natürlich in das Loch passen muss.

Als Versiegelungsmasse wird eine solche gewählt, welche zum Zeitpunkt des Auftragens pumpbar, aber nicht flüssig, sondern zäh-pastös ist, so dass sie in einem Arbeitsgang in einer dickeren Schicht aufgetragen werden kann, als es nach dem bekannten Verfahren durch das Aufsprühen einer gelösten Versiegelungsmasse möglich ist. Nach dem Auftragen sollte sich die Versiegelungsmasse dann allerdings allmählich verfestigen, indem sie abkühlt und/oder abbindet. Für die Erfindung geeignet sind solche Versiegelungsmassen, die auch noch nach Jahren nicht spröde werden, sondern eine Elastizität beibehalten. Besonders geeignet sind heiß zu verarbeitende Versiegelungsmassen, insbesondere auf der Basis von Polyisobutylenen (Butylkautschuke). Geeignet sind ferner hochviskose Kleber auf der Basis von Epoxidharzen und Polyurethanen.

Erfindungsgemäß läßt sich ein über viele Jahre wirksamer Korrosionsschutz erreichen, ohne dass dafür aufwendige Maßnahmen erforderlich wären.

Da die Versiegelungsmasse in ihrem natürlichen, zäh-pastösen Zustand aufgetragen werden kann, ist es nicht nötig, sie mit einem Lösungsmittel zu versetzen, um sie verarbeitbar zu machen.

Besonders vorteilhaft ist das erfindungsgemäße Verfahren für den Zusammenbau von Karosserieteilen, welche aus einem inneren Karosserieblech und aus einem äußeren Karosserieblech bestehen, welches größer ist als das innere Karosserieblech und an seinem Rand umgebördelt wird, so dass es den Rand des inneren Karosserieblechs fest umgreift. Zur Versiegelung des Bördelfalzes wird nicht das äußere Karosserieblech auf seiner Innenseite, sondern das innere Karosserieblech am Rand mit der zäh-pastösen Versiegelungsmasse beschichtet, die den Rand U-förmig umgreift. Erfindungsgemäß sind vor allem im kritischen Stirnkantenbereich dikkere Beschichtungen möglich als beim Stand der Technik. Dadurch ist eine lückenlose Füllung des Bördelfalzes mit der Versiegelungsmasse gewährleistet. Ein weiterer Vorteil liegt darin, dass die Versiegelungsmasse etwas über die umgebördelte Kante des äußeren Karosseriebleches vorstehen kann. Die Möglichkeit, durch das erfindungsgemäße Verfahren das Karosserieblech im Stirnkantenbereich besonders dick zu beschichten, ist sehr wichtig, denn dort neigt das äußere Karosserieblech beim Bördelvorgang am ehesten zur Hohlraumbildung.

Das erfindungsgemäße Verfahren eignet sich aber nicht nur zur Versiegelung des Bördelfalzes solcher aus zwei Karosserieblechen zusammengesetzter Karosserieteile, sondern auch zum Versiegeln des Randes einzelner Bleche oder zum Versiegeln des Randes von Bohrungen und anderen Löchern in Blechen. So kann z.B. ein Loch zur Aufnahme einer Antenne in entsprechender Weise versiegelt werden. Der versiegelte Rand kann in an sich bekannter Weise in die Ringnut eines Montageteils aus Gummi oder Kunststoff eingeführt werden, welches seinerseits am Antennenschutzrohr befestigt ist.

Die Erfindung ist darüberhinaus anwendbar in anderen Fällen, in denen es darum geht, plattenförmige oder tafelförmige Werkstücke, die ähnlich dünn sind wie die Karosseriebleche, am Rand zu versiegeln oder mit einem Kleb- oder Dichtstoff zu versehen. So ist es z.B. möglich, Glastafeln auf diese Weise an ihrem Rand mit einer dauerelastischen Dichtung zu versehen, mit welcher sie ohne weitere Versiegelung in Fenster eingebaut werden können.

Zum Auftragen einer zäh-pastösen Versiegelungsmasse auf dünne Werkstücke entlang ihrer Ränder eignet sich erfindungsgemäß eine maulförmig ausgebildete Düse, welche im hinteren Teil des Mauls mit mindestens einer Düsenöffnung versehen ist. Im Gegensatz zu der aus der DE-B-28 04 383 bekannten Beschichtungskammer hat die Düse nicht nur der Düsenöffnung gegenüberliegend einen Schlitz, vielmehr setzt sich der Schlitz in den beiden Seitenflächen des Düsenkörpers fort, wodurch die Düse ihre maulförmige Gestalt erhält. In das Maul der Düse wird das Werkstück mit seinem Rand eingeführt, so dass das Maul gleichzeitig der Oberseite, der Unterseite und der Stirnseite des Werkstücks zugewandt ist. Für das Auftragen der Versiegelungsmasse gleichzeitig auf die Oberseite, die Unterseite und die Stirnseite des Werkstückes wird wenigstens eine Düsenöffnung benötigt. Diese sollte im hinteren Teil des Mauls, also im Stirnkantenbereich des Werkstücks liegen, damit sich die aus der Düsenöffnung austretende Versiegelungsmasse gleichmässig über die Stirnseite und die Oberseite sowie die Unterseite des Werkstücks verteilen kann. Damit das möglich ist, muss das Maul der Düse natürlich so weit sein, dass zwischen den Begrenzungen des Mauls und den zu beschichtenden Bereichen des Werkstücks ein vorgegebener Abstand besteht, so dass ein Spalt vorhanden ist, in welchem sich die Versiegelungsmasse verteilen kann. Vorzugsweise ist die Öffnungsweite des Mauls am Rand kleiner als die im Innern des Mauls gemessene lichte Weite. Der Vorteil dieser Maßnahme liegt darin, dass sich auf diese Weise im Innern des Mauls die aus der Düsenöffnung austretende Versiegelungsmasse rasch und gleichmässig verteilen kann, wohingegen der Rand des Mauls dazu dient, die Düse auf dem Werkstück zu zentrieren und zu führen und die aufgetragene Versiegelungsmasse zu glätten und ihre Schichtdicke zu bestimmen. So wird man zweckmässigerweise die Breite des Streifens aus der Versiegelungsmasse dadurch begrenzen, dass man die beiden Ränder des Mauls, welche der Düsenöffnung gegenüberliegen, in einem Abstand voneinander anordnet, welcher mit der Dicke des Werkstückes übereinstimmt. An dieser Stelle findet gleichzeitig eine Führung und Zentrierung der Düse auf dem Werkstück statt; eine zusätzliche Führung kann man dadurch erreichen, dass man das Maul darüberhinaus auf einer seiner beiden Seiten so eng ausbildet, dass seine Öffnungsweite dort mit der Dicke des Werkstückes übereinstimmt. In diesem Fall kann die Düse allerdings nur in einer Richtung am Rand des Werkstückes entlangbewegt werden, nämlich so, dass diese Engstelle der Düsen öffnung vorausläuft. Die Öffnungsweite am gegenüberliegenden Rand des Mauls bestimmt die Schichtdicke der Versiegelungsmasse. Die Schichtdicke muss dabei keineswegs konstant sein, vielmehr sind auch ohne weiteres profilierte Beschichtungen möglich. Besonders geeignet und im Aufbau einfach ist eine Düse, deren Maul durch einen im wesentlichen ebenen, nach drei Seiten offenen Schlitz gebildet ist, welcher durch eine von der Rückseite her in die Düse eingebrachte Bohrung im Innern der Düse erweitert ist. Die Schlitzbreite bestimmt die Schichtdicke und die Bohrung erleichtert die gleichmässige Verteilung der Versiegelungsmasse im Maul.

Zur Begrenzung der Einstecktiefe des Werkstücks ist an der Düse zweckmässigerweise ein Anschlag vorgesehen, welcher am besten in unmittelbarer Nachbarschaft der Düsenöffnung vorgesehen ist, damit er nicht hinderlich ist, wenn die Düse an Ecken und gekrümmten Rändern entlangbewegt wird.

Anstatt im Maul nur eine Düsenöffnung vorzusehen, kann es auch vorteilhaft sein, zwei Düsenöffnungen vorzusehen, von denen die eine gegen die Oberkante und die andere gegen die Unterkante des Werkstückrandes gerichtet ist.

Um beim Abziehen der Düse vom beschichteten Rand des Werkstückes möglichst wenig Versiegelungsmasse abzuziehen, hat das Maul der Düse zweckmässigerweise einen verschwenkbaren Backen, so dass das Maul geöffnet und dadurch die Düse abgehoben statt abgezogen werden kann.

Zum Verändern der Öffnungsweite des Mauls könnte man einen der Backen, welche das Maul bilden, parallel zu sich selbst verschiebbar lagern. Vorzugsweise wird jedoch einer der Backen, noch besser beide Backen, verschwenkbar gelagert. Damit hat man nicht nur die Möglichkeit, die Schichtdicke der Versiegelungsmasse auf dem Werkstück zu variieren und das Einfädeln der Düse auf dem Werkstückrand zu erleichtern, vielmehr kann man auch wirksam ein Klemmen der Düsen auf dem Werkstückrand verhindern. Die Gefahr einer Verklemmung besteht insbesondere bei geformtem Blech infolge von Beschädigungen der Randzonen, bei hohen Sicken und kleinen Krümmungsradien. Durch ein Maul, dessen Öffnungsweite veränderlich ist, kann man über diese kritischen Stellen ohne die Gefahr einer Kollision hinwegfahren. Zweckmässigerweise sind die Backen dazu in Schließrichtung elastisch vorgespannt. Das Vorspannen kann durch zu diesem Zweck an sich bekannte Maschinenelemente erfolgen, insbesondere durch Federn oder Druckmittelzylinder. Beim Auflaufen auf eine kritische Stelle kann sich das Maul dann selbsttätig etwas öffnen und nach Überwinden der kritischen Stelle selbsttätig wieder schließen.

Das Führen der Düse entlang eines gekrümmten Werkstückrandes ist dann besonders einfach, wenn die Düse so ausgebildet ist, dass ihre Achse, um die sie drehbar ist, an der Stirnseite des Werkstückes liegt, wenn dieses bis zum Anschlag in das Maul eingeschoben ist.

Ausführungsbeispiele der Erfindung sind in den beigefügten Zeichnungen schematisch dargestellt.

Figur 1 zeigt eine erfindungsgemäße Düse im Längsschnitt,

Figur 2 zeigt die Ansicht "Y" auf die Rückseite der in Figur 1 dargestellten Düse,

Figur 3 zeigt den Querschnitt III-III durch die in Figur 1 dargestellte Düse,

Figur 4 zeigt die Ansicht "X" auf die Vorderseite dieser Düse,

Figur 5 zeigt ein anderes Ausführungsbeispiel einer Düse in der Seitenansicht während des Beschichtens eines Bleches,

Figur 6 zeigt die Düse aus Figur 5 nach dem Verlassen des Bleches,

Figur 7 zeigt ein anderes Ausführungsbeispiel einer Düse mit exzentrischer Drehachse zum Beschichten des Randes von kreisrunden Löchern in Blech,

Figur 8 zeigt die Düse aus Figur 7 während des Beschichtens,

Figur 9 zeigt die Düse aus Figur 7 am Arm eines Roboters angebracht,

Figur 10 zeigt ein nach dem erfindungsgemäßen Verfahren am Rand beschichtetes Blech in der Draufsicht,

Figur 11 zeigt den Querschnitt A-A durch das Blech in Figur 10,

Figur 12 zeigt im Längsschnitt eine Düse, deren Öffnungsweite durch einen verschwenkbaren Backen veränderlich ist,

Figur 13 zeigt im Längsschnitt eine Düse, deren Öffnungsweite durch zwei verschwenkbare Backen veränderlich ist,

Figur 14 zeigt die Düse aus Figur 13 in einem um 90° versetzten Längsschnitt,

Figur 15 zeigt eine Düse, deren Öffnungsweite durch einen verschwenkbaren Backen veränderlich ist, mit besonderer Lage der Schwenkachse der Düse, und

Figur 16 zeigt eine Düse, deren Öffnungsweite durch zwei verschwenkbare Backen veränderlich ist, im Längsschnitt, aber im Unterschied zur Figur 13 nicht mit abgewinkeltem, sondern mit geradlinigem Zuführkanal für die Versiegelungsmasse.

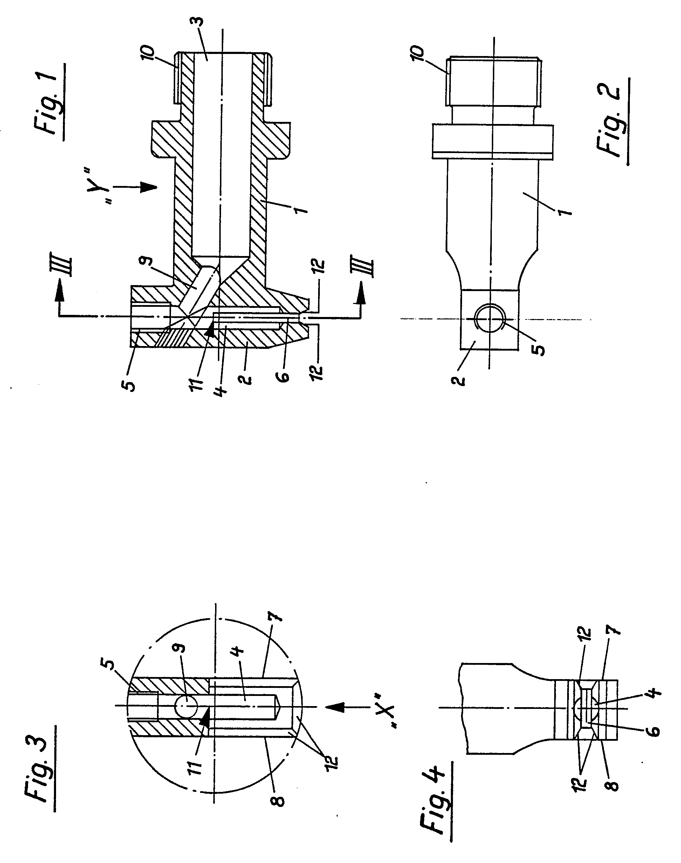

Die in den Figuren 1 bis 4 dargestellte maulförmige Düse hat einen Schaft 1 und einen länglichen, sich quer zum Schaft erstreckenden Kopf 2. Der Schaft weist eine Längsbohrung 3 auf und der Kopf 2 weist eine sich rechtwinklig zur Längsbohrung 3 erstreckende Bohrung 4 auf, welche von der Rückseite her in den Kopf 2 eingebracht und rückseitig durch einen Blindstopfen verschließbar ist, wozu die Bohrung mit einem Innengewinde 5 versehen ist. Die Bohrung 4 endet in einem Abstand von der Vorderseite des Düsenkopfes 2. In der vorderen Hälfte des Düsenkopfes befindet sich ein Schlitz 6, welcher sich im rechten Winkel zur Bohrung 3 erstreckt. Dieser Schlitz 6 ist zur Vorderseite und zu den beiden Flanken 7 und 8 des Düsenkopfes hin offen. Die Schlitzbreite ist kleiner als der Durchmesser der Bohrung 4. Der Schlitz 6 und der im Schlitz 6 verlaufende vordere Abschnitt der Bohrung 4 bilden gemeinsam das Innere des Düsenmauls. Die Längsbohrung 3 und die Bohrung 4 sind durch eine schräg verlaufende Bohrung 9 miteinander verbunden. Zum Anschluß einer Zuleitung für eine Versiegelungsmasse ist der Schaft 1 an seinem dem Kopf 2 abgewandten Ende mit einem Aussengewinde 10 versehen.

Ein zu beschichtendes Blech o. dgl. dünnes Werkstück wird in den Schlitz 6 eingeführt und dann wird die Düse am Rand des Bleches entlanggeführt, wobei gleichzeitig durch eine Pumpe der Düse die Versiegelungsmasse zugeführt wird. Die Versiegelungsmasse strömt durch die Bohrungen 3, 9 und 4 in den Bereich des Schlitzes 6 und verteilt sich dort. Die Düsenöffnung 11 wird gebildet durch den Querschnitt der Bohrung 4 am Ende des Schlitzes 6.

Zum leichteren Einführen des Bleches sind die den Schlitz begrenzenden Wände am äußeren Rand des Schlitzes mit einer Fase 12 versehen.

Bei den nachfolgend beschriebenen Ausführungsbeispielen sind Teile, die Teilen des ersten Ausführungsbeispieles gleichen oder entsprechen, mit denselben Bezugszahlen wie im ersten Ausführungsbeispiel bezeichnet.

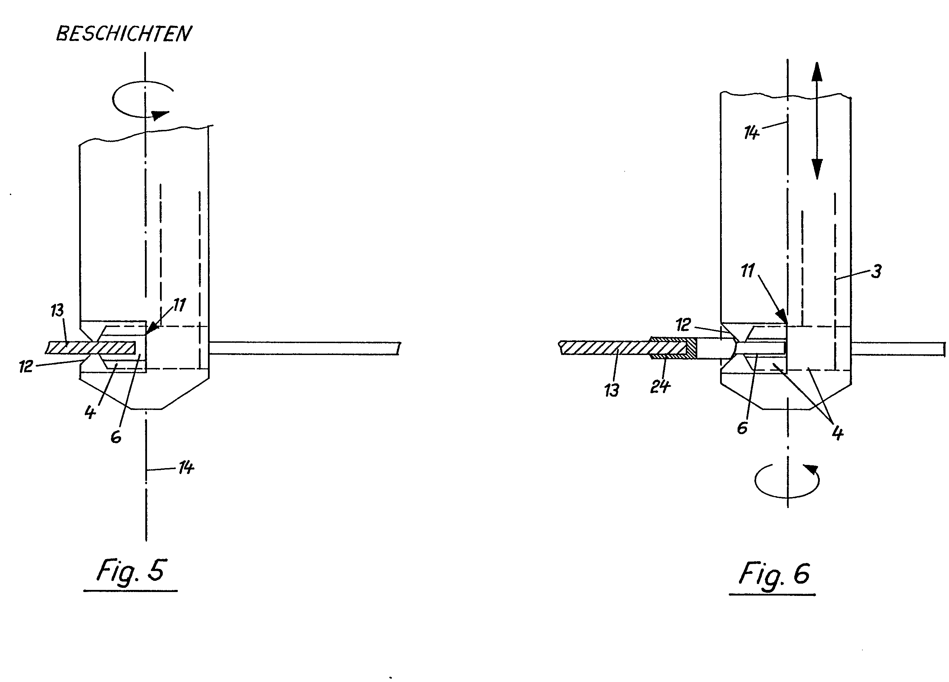

Das in den Figuren 5 und 6 dargestellte Ausführungsbeispiel unterscheidet sich von dem ersten Ausführungsbeispiel im wesentlichen darin, dass der Düsenkopf über den Düsenschaft nicht übersteht und dass der zum Maul der Düse gehörende Schlitz 6 am vorderen Rand, der Düsenöffnung 11 gegenüberliegend, verengt ist, so dass die Öffnungsweite dort mit der Dicke des Blechs 13 übereinstimmt, welches zum Beschichten eingeführt wird. Auf diese Weise wird das Blech zentriert und geführt und zugleich die Breite des Streifens der Versiegelungsmasse 24 auf dem Rand des Bleches 13 scharf begrenzt, wie es die Figur 6 zeigt. Die Düse ist um ihre Längsachse 14 drehbar, welche ungefähr durch die mit dem hinteren Ende des Schlitzes 6 zusammenfallende Düsenöffnung 11 hindurchgeht, so dass die Düse zum unterbrechungsfreien Beschichten leicht um Ecken des zu beschichtenden Blechs herumgeführt werden kann.

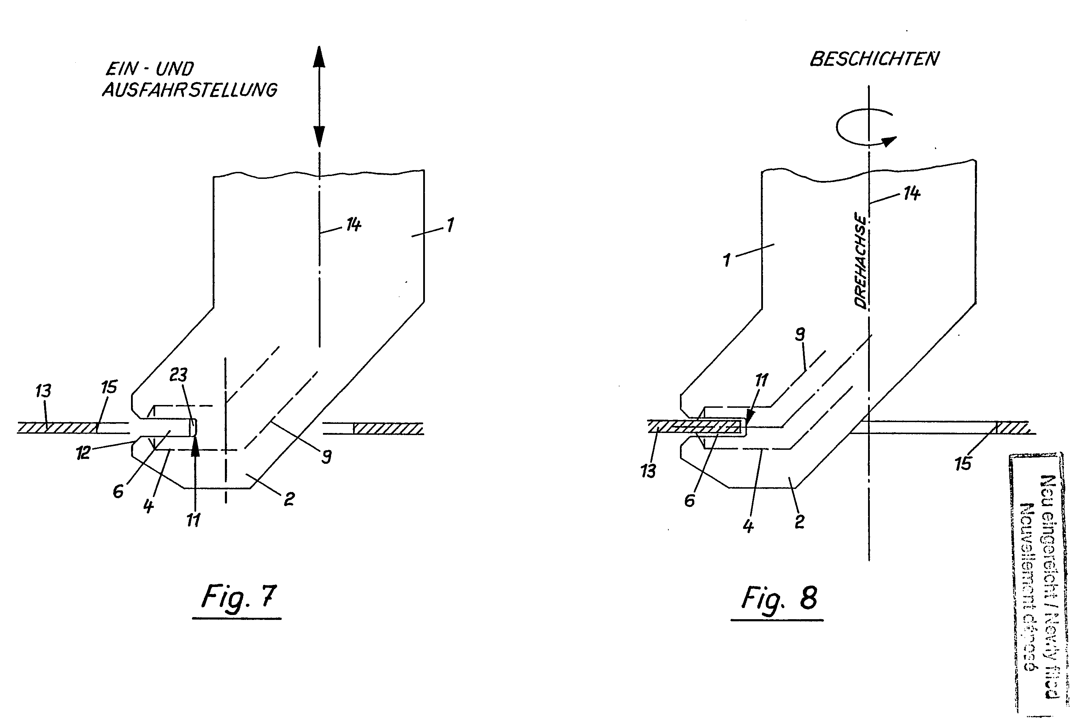

Die in den Figuren 7 und 8 dargestellte Düse unterscheidet sich von der in den Figuren 5 und 6 dargestellten Düse im wesentlichen darin, dass sie einen abgeköpft angeordneten Düsenkopf 2 hat und um eine in Bezug auf die Düsenöffnung 11 exzentrische, nämlich zurückverlegte Achse 14 verdrehbar ist. Ausserdem zeigt diese Düse am hinteren Ende des Schlitzes 6 in der Nachbarschaft der Düsenöffnung 11 ein Anschlag 23, welcher die Eindringtiefe des Werkstücks 13 begrenzt. Diese Düse eignet sich besonders zum Beschichten des Randes von kreisrunden Löchern 15 in dem Blech o. dgl. dünnen Werkstücken 13. Infolge der abgekröpften Gestalt kann die Düse leicht in das Loch eingeführt und auf den Rand des Werkstücks aufgeschoben werden. Danach kann der Rand des Werkstücks 13 allein durch Drehung der Düse um ihre Achse 14 beschichtet werden.

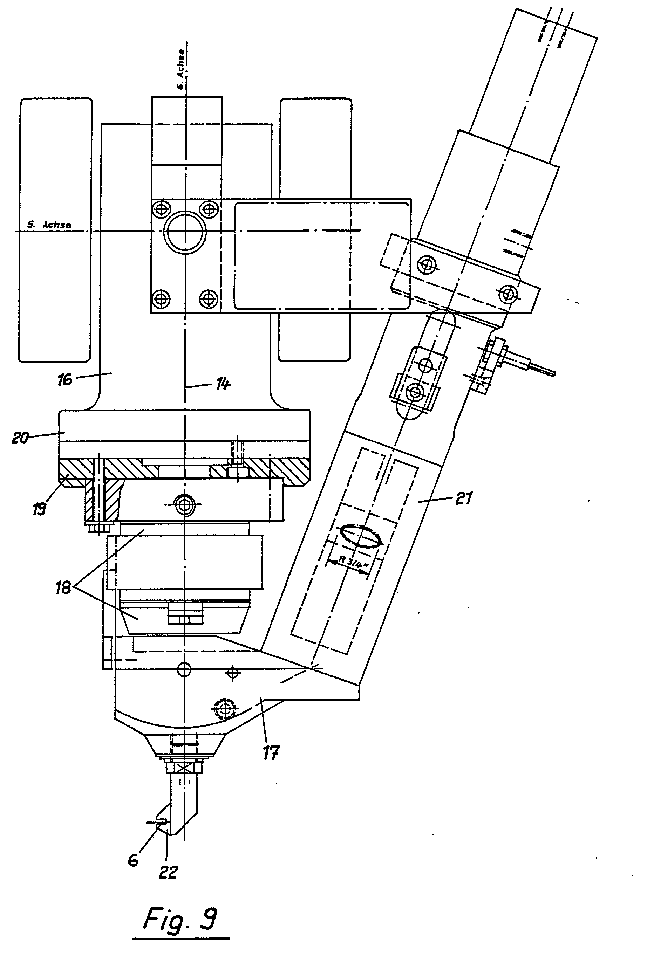

Figur 9 zeigt, wie eine solche Düse am Arm 16 eines Roboters angebracht sein kann. Sie ist zu diesem Zweck um ihre Achse 14 drehbar an einer Halterung 17 gelagert. Zu diesem Zweck ist die Düse an einer die Halterung 17 durchsetzenden Welle 18 befestigt, welche ihrerseits mit einem Flansch 19 am Montageflansch 20 des Roboterarms 16 befestigt und mit diesem relativ zur Halterung 17 drehbar ist. Seitlich an der Halterung 17 ist eine Kolben-Zylinder-Einheit 21 angebracht, welche zum Zuführen der Versiegelungsmasse zur Düse 22 dient. Ein detailliert beschriebenes Beispiel für den Aufbau der Halterung 17 und der Düsenwelle 18 sowie der Kolben-Zylinder-Einheit 21 findet sich in der älteren, aber nicht vorveröffentlichten deutschen Patentanmeldung P 38 15 706.3.

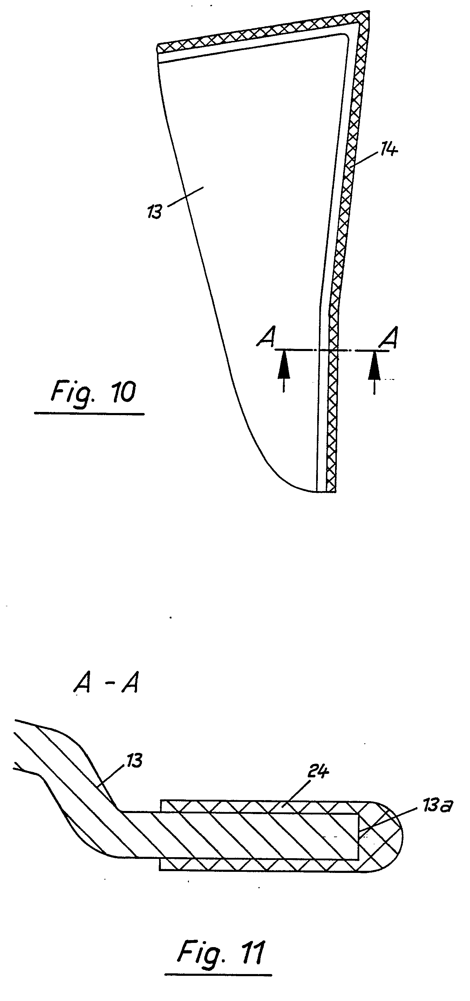

Die Figuren 10 und 11 zeigen, wie die Beschichtung eines Blechs 13 an seinem Rand vorzugsweise aussieht. Die Versiegelungsmasse 14 ist mit gleichmässiger Schichtdicke auf die Oberseite und die Unterseite des Blechs aufgetragen, an der Stirnkante 13a des Blechs ist sie jedoch ballig mit erheblich größerer Dicke als auf der Oberseite und Unterseite des Blechs aufgetragen. Typische Abmessungen seien anhand eines Zahlenbeispieles erläutert: Ein 0,8 mm dickes Blech ist auf seiner Oberseite und auf einer Unterseite mit einem 10 mm breiten Streifen mit einer Dicke von 0,2 mm beschichtet. Auf der Stirnkante ist die Beschichtung 0,8 bis 1,0 mm dick. Eine solche Beschichtung eignet sich insbesondere für das innere Karosserieblech eines aus zwei Karosserieblechen zusammengebauten Karosserieteils, bei dem der Rand des inneren Karosserieblechs durch Umbördeln des Randes des äußeren Karosserieblechs fest umschlossen wird.

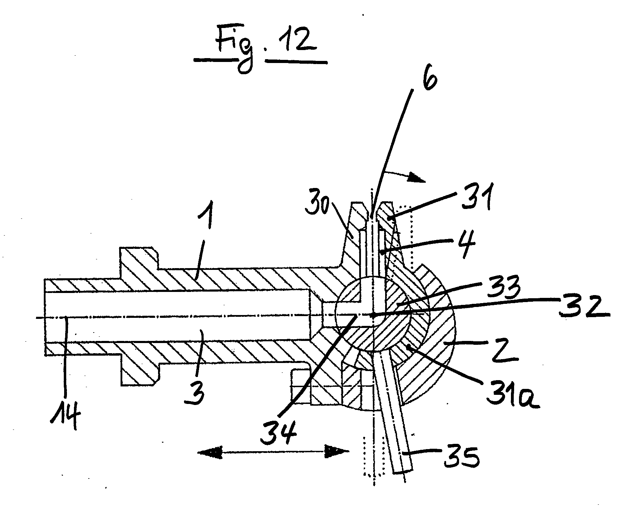

Die in Figur 12 dargestellte Düse hat einen Schaft 1 und einen gerundeten Kopf 2 mit einem Maul, welches durch zwei Backen 30 und 31 gebildet ist, die quer zur Längsbohrung 3 des Schaftes ausgerichtet sind und über den Umfang des Schaftes 1 vorspringen. Der Backen 31 ist mit einem teilzylindrischen Abschnitt 31a in einer entsprechend teilzylindrisch ausgebildeten Höhlung des Kopfes 2 um eine Achse 32 verschwenkbar gelagert, welche rechtwinklig zur Längsachse 14 des Schaftes verläuft. Der Abschnitt 31a umschließt einen zylindrischen Körper 33, in welchem eine abgewinkelte Bohrung 34 vorgesehen ist, welche die Längsbohrung 3 des Schaftes mit der Bohrung 4 im Maul verbindet.

Zum Verdrehen des Backen 31 steckt in dessen Abschnitt 31a ein Hebel 35, welcher aus dem Kopf 2 herausgeführt ist und durch ein Maschinenelement, z.B. durch eine Feder oder einen Druckmittelzylinder beaufschlagt werden kann, vorzugsweise in der Weise, dass der Backen 31 dauernd elastisch in Richtung auf den feststehenden Backen 30 gedrückt wird, wobei er diesen jedoch nicht erreicht, weil der Hebel 35 vorher an einer Anschlagfläche des Kopfes 2 anschlägt.

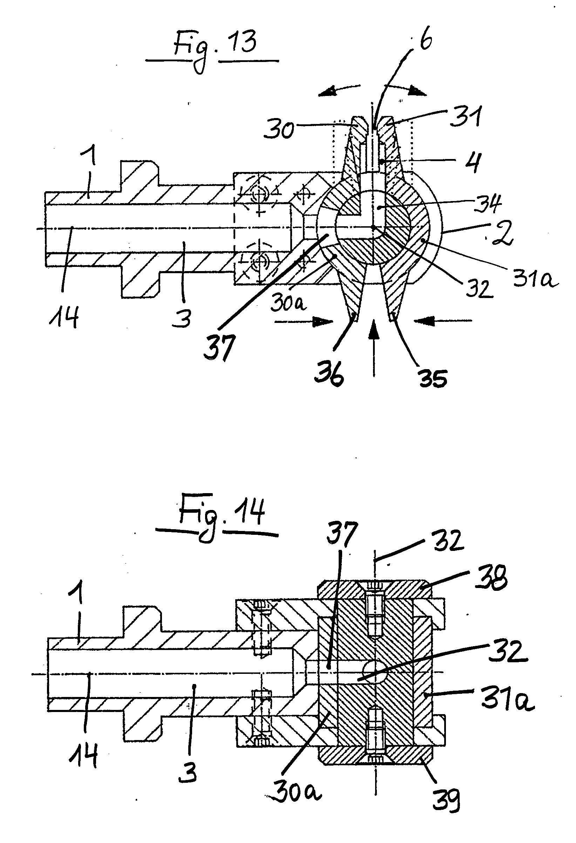

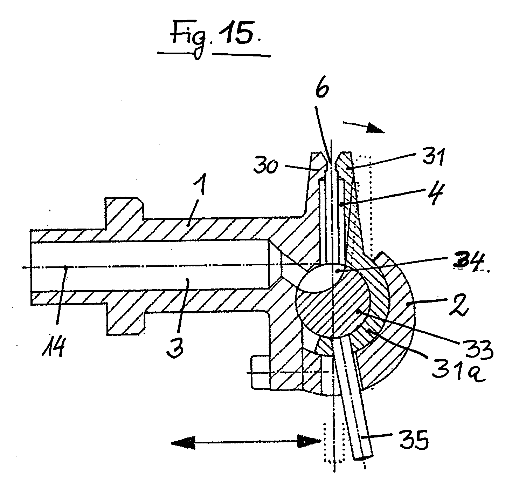

Die in Figuren 13 und 14 dargestellte Düse unterscheidet sich von der in Figur 12 dargestellten Düse dadurch, dass beide Backen 30 und 31, die das Maul bilden, um dieselbe Achse 32 verschwenkbar gelagert sind. Deshalb hat auch der zweite Backen 30 einen teilzylindrischen Abschnitt 3a, welcher ebenso wie der teilzylindrische Abschnitte 31a des Backens 31 um denselben zylindrischen Kern 33 des Kopfes verschwenkbar angeordnet ist. Beide Backen 30 und 31 können durch Hebel 35 und 36 verdreht werden, die in die entgegengesetzte Richtung wie die Backen 30 und 31 weisen. Dadurch, dass auch der Backen 30 verdrehbar ist, war es nötig, ihn mit einem Durchbruch 37 zu versehen, durch den hindurch die Zufuhr der Versiegelungsmasse erfolgt.

Der zylindrische Kern 33 ist in der Zylindrischen Höhlung des Kopfes 2 durch zwei Endplatten 38 und 39 festgelegt, die mit dem Kern 33 verschraubt sind.

Die in Figur 15 dargestellte Düse ist in ihrem Aufbau der in Figur 12 dargestellten Düse ähnlich, unterscheidet sich von dieser jedoch durch eine andersartige Lage der Längsachse 14 des Schaftes, um welche die Düse bei ihrer Bewegung um Ecken des Werkstückes herum gedreht werden kann. Diese Achse 14 schneidet nicht die Schwenkachse des Backens 31, sondern liegt am inneren Ende der Bohrung 4 des Kopfes, nämlich dort, wo diese in den Kern 33 eintritt. Bis dahin kann das Werkstück in das Maul eingeschoben werden, so dass in vorteilhafter Weise Drehungen der Düse um einen am Rand des Werkstückes liegenden Punkt erfolgen können, was die Steuerung der Düse sehr vereinfacht.

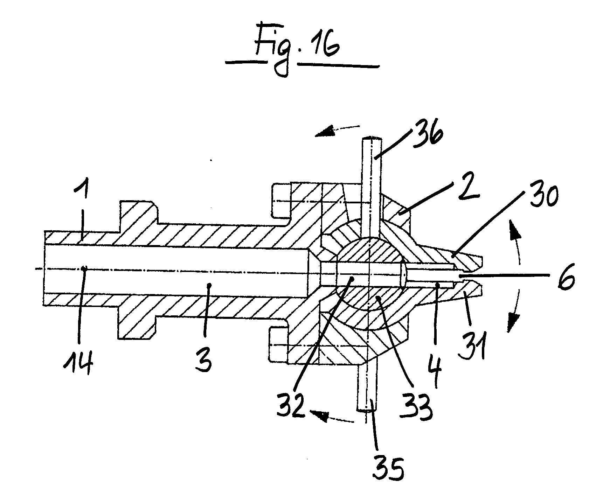

Die in Figur 16 dargestellte Düse ist wie die in den Figuren 13 und 14 dargestellte Düse mit zwei verschwenkbaren Backen 30 und 31 ausgerüstet, doch verläuft der Weg, über den die Versiegelungsmasse zugeführt wird, nicht abgewinkelt, sondern geradlinig, d.h., dass die Öffnung des Mauls in der Flucht der Längsbohrung 3 des Schaftes 1 liegt.

## Ansprüche

1. Verfahren zum Versiegeln der Kanten von dünnen, plattenförmigen oder tafelförmigen Werkstücken oder daraus hergestellten Formteilen, insbesondere von Karosserieblechen, durch Auftragen einer pumpbaren, zäh-pastösen Versiegelungsmasse auf das Werkstück in der Weise, dass die Versiegelungsmasse gleichzeitig auf die Oberseite, die Unterseite und auf die Stirnseite des Werkstückes, den Rand des Werkstückes U-förmig umgreifend, aufgetragen wird, **dadurch gekennzeichnet,** dass die Versiegelungsmasse entlang des Randes fortschreitend auf das Werkstück aufgetragen wird.

2. Verfahren nach Anspruch 1, **dadurch gekennzeichnet,** dass die Versiegelungsmasse auf die Stirnseite des Werkstückes am dicksten aufgetragen wird.

3. Verfahren nach Anspruch 2, **dadurch gekennzeichnet,** dass die Versiegelungsmasse auf die Stirnseite des Werkstückes viermal bis fünfmal so dick aufgetragen wird wie auf die angrenzende Werkstückoberfläche.

4. Verfahren nach einem der Ansprüche 1 bis 3, **dadurch gekennzeichnet,** dass als Versiegelungsmasse ein heiß zu verarbeitendes Polyisobutylen verwendet wird.

5. Düse zum Auftragen einer zäh-pastösen Versiegelungsmasse auf dünne, tafelförmige oder plattenförmige Werkstücke oder auf daraus hergestellte Formteile, insbesondere auf Karosseriebleche, entlang ihrer Ränder, **dadurch gekennzeichnet,** dass die Düse maulförmig ausgebildet und im hinteren Teil des Mauls (4, 6) mit mindestens einer Düsenöffnung (11) versehen ist.

6. Düse nach Anspruch 5, **dadurch gekennzeichnet,** dass ihre am Rand des Mauls (4, 6) gemessene Öffnungsweite kleiner ist als die im Inneren des Mauls (4, 6) gemessene lichte Weite.

7. Düse nach Anspruch 6, **dadurch gekennzeichnet,** dass das Maul (4, 6) durch einen im wesentlichen ebenen, nach drei Seiten offenen Schlitz (6) gebildet ist, welcher durch eine von der Rückseite her in die Düse eingebrachte Bohrung (4) im Innern der Düse erweitert ist.

8. Düse nach einem der Ansprüche 5 bis 7, **dadurch gekennzeichnet,** dass an ihr ein Anschlag (23) vorgesehen ist, der die Tiefe, bis zu welcher das Werkstück (13) in das Maul (4, 6) eingeführt werden kann, auf weniger als die Tiefe des Maules (4, 6) beschränkt.

9. Düse nach Anspruch 8, **dadurch gekennzeichnet,** dass der Anschlag (23) im Maul (4, 6) in unmittelbarer Nachbarschaft der Düsenöffnung (11) vorgesehen ist.

10. Düse nach einem der Ansprüche 5 bis 9, **dadurch gekennzeichnet,** dass das Maul (4, 6) nicht breiter als 2 cm, vorzugsweise nicht breiter als 1 cm ist.

11. Düsen nach einem der Ansprüche 5 bis 10, **dadurch gekennzeichnet,** dass die Öffnungsweite des Mauls (4, 6) veränderlich ist.

12. Düse nach Anspruch 11, **dadurch gekennzeichnet,** dass das Maul durch einen vorzugsweise durch zwei einander gegenüberliegende, verschwenkbare Backen (30, 31) begrenzt ist.

13. Düse nach Anspruch 12, **dadurch gekennzeichnet,** dass einer oder beide Backen (30, 31) in Schließrichtung elastisch vorgespannt sind.

14. Düse nach einem der Ansprüche 5 bis 13, **dadurch gekennzeichnet,** dass sie um eine Achse (14) drehbar ist, welche bei bis zum Anschlag eingeführtem Werkstück an der Stirnseite des Werkstücks liegt.

Fig. 3

Fig. 4

Fig. 1

Fig. 2

"Y"

"X"

EP 0 369 181 A2

BESCHICHTEN

_Fig. 5_

_Fig. 6_

Fig. 8

Fig. 7

_Fig. 9_

_Fig. 10_

14

13

A          A

_A - A_

13

24

13a

_Fig. 11_

Fig. 12

Fig. 13

Fig. 14

Fig. 15.

Fig. 16